Europäisches Patentamt

European Patent Office

Office européen des brevets

(11) Veröffentlichungsnummer: **0 436 820 A2**

## (12) EUROPÄISCHE PATENTANMELDUNG

(21) Anmeldenummer: **90122680.3**

(22) Anmeldetag: **27.11.90**

(51) Int. Cl.5: **H04B 10/20**

(30) Priorität: **09.01.90 DE 4000444**

(43) Veröffentlichungstag der Anmeldung:
**17.07.91 Patentblatt 91/29**

(84) Benannte Vertragsstaaten:
**DE FR GB IT**

(71) Anmelder: **Siemens Aktiengesellschaft**
**Wittelsbacherplatz 2**
**W-8000 München 2(DE)**

(72) Erfinder: **Kunze, Dieter, Dipl.-Ing.**
**Rosenstrasse 10**
**W-8027 Neuried(DE)**

(54) **Optisches Nachrichtennetz.**

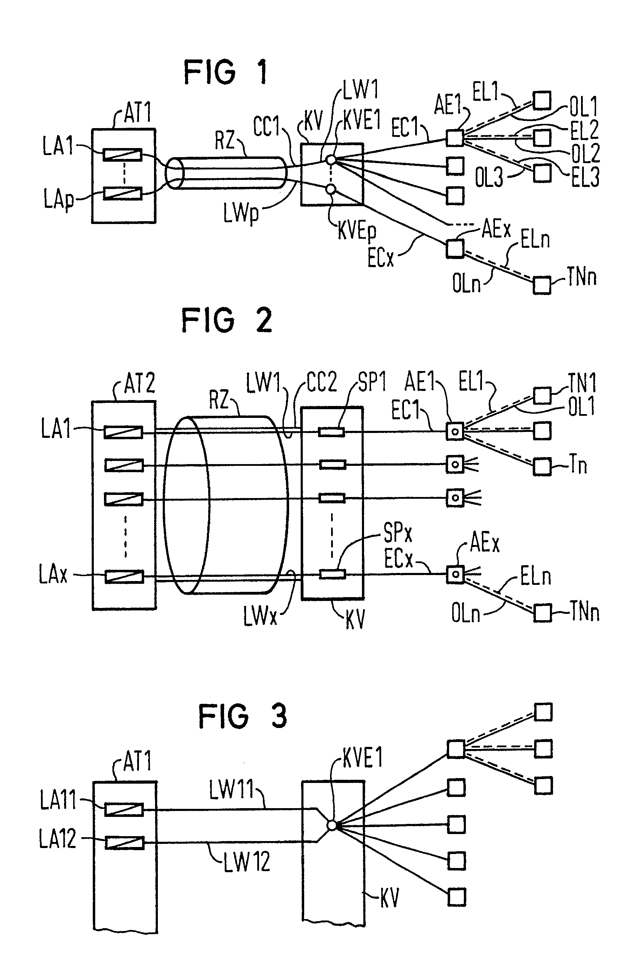

(57) Das optische Nachrichtennetz weist in einer ersten Ausbaustufe (Fig. 1) ein von einem Amt (AT1) kommendes gemeinsames Kabel (CC1) auf, das bis zu einem Kabelverzweigungspunkt (KV) in einem Rohrzug (RZ) geführt ist. Dort wird über Verzweigungseinrichtungen (KVE1-KVEp) eine Aufteilung in eine Vielzahl erdverlegter optischer Einzelkabel (EC1-ECx) vorgenommen. Die Zahl (p) der Lichtwellenleiter im gemeinsamen Kabel (CC1) ist wesentlich kleiner als die Zahl (x) der Lichtwellenleiter bei den erdverlegten optischen Einzelkabeln (EC1-ECx). In einer zweiten Ausbaustufe (Fig. 2) wird ein gemeinsames Kabel (CC2) verlegt, bei dem mindestens so viele Lichtwellenleiter (LW1-LWx) vorgesehen sind, wie Einzelkabel (EC1-ECx) vorhanden sind. An der Kabelverzweigungsstelle (KV) werden die Verzweigungseinrichtungen (KVE1-KVEp) durch Spleiße (SP1-SPx) ersetzt.

FIG 1

EP 0 436 820 A2

## OPTISCHES NACHRICHTENNETZ

Die Erfindung betrifft ein optisches Nachrichtennetz mit mindestens einem ersten von einem Amt kommenden gemeinsamen Kabel, das in einem Rohrzug bis zu einem Kabelverzweigungspunkt geführt ist, wo über Verzweigerungseinrichtungen eine Aufteilung in eine Vielzahl optischer Einzelkabel erfolgt.

Der Ersatz der in Kupferleitungen ausgeführten öffentlichen Nachrichtennetze durch Lichtwellenleiter wird durch die anfänglich hohen Kosten und den zunächst geringen Bedarf erschwert. Es ist bekannt, im Ortsnetzbereich Lichtwellenleiter-Anschlüsse für einzelne Großkunden vorzusehen. Auch ist es bekannt, eine Vielzahl von Nachrichtenkanälen, insbesondere Telefonkanälen auf einem oder zwei (bei getrennter Hin- und Rückrichtung) Lichtwellenleiter im Zeitmultiplexverfahren zu betreiben und die optischen Signale bis zu einem Umsetzpunkt ("active pedestal") zu führen, wo die opto-elektrische Umsetzung vorgenommen wird. Die Versorgung der Teilnehmer im Endbereich des Nachrichtennetzes erfolgt über Kupferleitungen. Neben diesen in den USA gebräuchlichen Netzen wird in Großbritannien ein Lichtwellenleiter-Netz im TDMA-Verfahren betrieben, bei dem sich die Lichtwellenleiter an einer Verzweigungsstelle passiv über Verzweigungseinrichtungen (Koppler) verzweigen. Die teilnehmerseitig gesendeten Signale werden in vorgegebene Zeitschlitze eingeordnet, so daß eine zeitliche Überschneidung der Signale vermieden wird.

Die zuletzt genannte Lösung ist deshalb besonders wirtschaftlich, weil amtsseitig z.B. ein einziger optischer Sender (Laser) genügt und jeweils ein Lichtwellenleiter eines gemeinsamen Übertragungskabels größerer Länge für eine Vielzahl (z.B. 256) Telefonteilnehmer ausreichend ist. Bis zu den Umsetzstellen, bei denen die optischen Signale in elektrische Signale umgewandelt werden, ist somit eine Vielzahl von optischen Einzelkabeln zu verlegen.

Der vorliegenden Erfindung liegt die Aufgabe zugrunde, bei einem optischen Nachrichtennetz der eingangs genannten Art einen Anfangsbetrieb mit geringem Aufwand sowohl auf der Amtsseite als auch im Bereich des gemeinsamen Übertragungskabels vorzusehen und Möglichkeiten zu schaffen, wie in einem späteren Ausbauzustand ein Übertragungsnetz sehr hoher Übertragungskapazität geschaffen werden kann, wobei zumindest ein Teil des verlegten Netzes weiter zu verwenden ist. Gemäß der Erfindung, welches sich auf ein optisches Netz der eingangs genannten Art bezieht wird diese Aufgabe dadurch gelöst, daß in einer ersten Ausbaustufe das gemeinsame Kabel eine Anzahl von Lichtwellenleitern aufweist, die wesentlich geringer ist als die Zahl der Lichtwellenleiter der über die Verzweigungseinrichtungen angeschlossenen Einzelkabel, daß in einer zweiten Ausbaustufe ein gemeinsames Kabel in den Rohrzug eingebracht wird, das eine Anzahl von Lichtwellenleitern aufweist, die mindestens der Zahl der Lichtwellenleiter der Einzelkabel entspricht und daß die Verzweigungseinrichtungen am Verzweigungspunkt entfernt und die Lichtwellenleiter des gemeinsamen Kabels direkt über Spleiße mit den Lichtwellenleitern der Einzelkabel durchverbunden werden.

In der ersten Ausbaustufe ist somit auf der Amtsseite nur eine geringe Zahl von optischen Sendern (Laser) notwendig, weil diese die zu übertragenden Nachrichten im Zeitmultiplexverfahren über eine oder nur wenige Lichtwellenleiter übertragen und zwar für eine sehr große Teilnehmerzahl. Die optischen Signale jeder dieser Faser(n) werden zu entfernten Abzweigeinrichtungen ("Distant Terminal") geführt, wo die Umsetzung in elektrische Signale erfolgt und die Weiterverteilung über Kupferleitungen durchgeführt wird.

Bei Bedarf können auch bereits bei diesem Netz ein oder mehrere Teilnehmer direkt mit optischen Signalen versorgt werden, die z.B. dann mit 2Mbit/s zu versorgen sind. Es ist auch möglich einen Lichtwellenleiter vom Amt direkt zum Kunden durchzuschalten, um ihn z.B. mit Breitband-ISDN zu versorgen.

Der Hauptanteil der Nachrichtenverbindungen wird aber über passive Verzweigungseinrichtungen (Koppler) laufen, welche die über einen Lichtwellenleiter ankommenden optischen Signale auf eine Vielzahl von Teilnehmern (z.B. 256) aufteilen.

In der zweiten Ausbaustufe erfolgt eine Abänderung dahingehend, daß ein gemeinsames Kabel in den Rohrzug eingebracht wird, welches eine Anzahl von Lichtwellenleitern aufweist, die mindestens der Zahl der Lichtwellenleiter der Einzelkabel entspricht, so daß die passiven Verzweigungseinrichtungen am Verzweigungspunkt entfernt werden können und die Lichtwellenleiter des gemeinsamen Kabels direkt über Spleiße mit den Lichtwellenleitern der Einzelkabel durchzuverbinden sind. Da im Bereich des gemeinsamen Kabels ein Rohrzug vorgesehen ist, ist das nachträgliche Einziehen des nunmehr eine größere Aderzahl aufweisenden gemeinsamen Kabels in der zweiten Ausbaustufe ohne Weiteres möglich.

Weiterbildungen der Erfindung sind in Unteransprüchen wiedergegeben.

Die Erfindung und Ihre Weiterbildungen werden nachfolgend anhand von Zeichnungen näher erläutert. Es zeigen:

Fig. 1    den Aufbau eines optischen Nachrichtennetzes in der ersten Ausbaustufe,

Fig. 2    den abgewandelten Aufbau des Nachrichtennetzes nach Fig. 1 für die zweite Ausbaustufe und

Fig. 3    in schematischer Darstellung eine
          Mehrfach-Verbindung.

In Figur 1 ist ein Amt mit AT1 bezeichnet, in dem p (p $\geq$ 1) optische Sender (Laser) LA1-LAp vorgesehen sind. Von diesem Amt AT1 aus führt ein optisches Kabel CC1 mit einer Anzahl von p Lichtwellenleitern LW1-LWp zu einem Verteilungspunkt KVP. Das Kabel CC1 ist in einem Rohrzug RZ untergebracht, der vorzugsweise aus entsprechend groß dimensionierten Kunststoffrohren besteht.

In dem Verzweigungspunkt KV sind p Verzweigungseinrichtungen KVE1-KVEp vorgesehen, und zwar für jeden ankommenden der p Lichtwellenleiter LW1-LWp des Kabels CC1 jeweils eine. Diese Verzweigungseinrichtungen sind bevorzugt in Form passiver Verzweigungen aufgebaut, insbesondere als optische Richtkoppler, wobei durch eine Kaskadenschaltung von 1 : 4-Kopplern eine entsprechend große Anzahl von Ausgängen beim Verzweigungspunkt KVP bereitgestellt werden kann. Geht man davon aus, daß bei jeder Verzweigungseinrichtung KVE1-KVEp eine Verzweigung im Verhältnis 1 : q erfolgt, dann können an den Ausgängen der Verzweigungseinrichtungen KVE1-KVEp maximal q$\cdot$p = x erdverlegte optische Einzelkabel EC1-ECx mit jeweils mindestens einem Lichtwellenleiter angeschlossen werden. Die Zahl p der Lichtwellenleiter LW1-LWp in dem gemeinsamen optischen Kabel CC1 ist wesentlich kleiner gewählt als die Zahl x der angeschlossenen optischen Einzelkabel EC1-ECx.

Am Ende der jeweiligen Einzelkabel EC1-ECx ist jeweils eine Abzweigschaltung AE1-AEx vorgesehen, von der aus optische Leitungen OL1-OLn und/oder elektrische Leitungen EL1-ELn zu n Teilnehmer TN1-TNn geführt sind. Die elektrischen und die optischen Leiter werden zweckmäßig in einem gemeinsamen Kabel verlegt.

Die Abzweigschaltungen AE1-AEx enthalten bei Verwendung von weiterführenden elektrischen Leitungen EL1-ELn optisch-elektrische Umsetzer sowie gegebenenfalls Verstärkungsschaltungen, Filterschaltungen usw.

Die Umsetzung von optischen in elektrische Signale ist nur dort notwendig, wo Teilnehmer versorgt werden sollen, die für den Empfang elektrischer Signale ausgelegt sind. Handelt es sich dagegen um Teilnehmer, die für eine optische Versorgung ausgelegt sind (also ihre O/E-Umsetzer selbst enthalten), dann ist eine derartige Umsetzung im Bereich der Abzweigschaltungen AE1-AEx ("DISTANT TERMINAL") nicht erforderlich. Statt dessen kann eine Ankopplung über passive Verzweigungsschaltungen vorgenommen werden.

Bei den Teilnehmerstellen TN1-TNn kann es sich um einfache Telefonanschlüsse handeln, und/oder um ISDN-Anschlüsse und/oder um Anschlüsse mit hohen Bitraten, wie z.B. Rechner handeln. Selbstverständlich sind auch Mischungen aus den genannten Einzel-Anschlußarten möglich.

Die Signalübertragung erfolgt in der ersten Ausbaustufe gemäß Fig. 1 für die Teilnehmer TN1-TNn, die jeweils einem der p Lichtwellenleiter des Kabels CC1 zugeordnet sind, mit nur einem Zeitmultiplexsystem (TDMA). Es ist demnach möglich, sämtliche der p Lichtwellenleiter des gemeinsamen optischen Kabels CC1 (parallel) mit den gleichen Zeitmultiplex-System bzw. -Signal zu versorgen. Es ist aber auch möglich, für jedem der p Lichtwellenleiter ein eigenes Zeitmultiplex-System vorzusehen, wozu die einzelnen optischen Sender LA1-LAp im Amt AT1 benötigt werden.

Während Fig. 1 den Aufbau des optischen Verteilungssnetzes in einer ersten einfacheren und billigeren Ausbaustufe zeigt, kann ohne großen Aufwand später eine Nachrüstung ensprechend Fig. 2 erfolgen. Im Amt AT2 sind hier eine größere Anzahl x von Lasersendern LA1-LAx vorgesehen, als die p Lasersender beim Amt AT1, wobei ein ensprechend vieladriges optisches Kabel CC2 (mindestens mit Lichtwellenleitern LW1-LWx) in den Rohrzug RZ eingezogen wird. Dieses vieladrige optische Kabel CC2 kann das bisherige Kabel CC1 vollständig ersetzen; es ist aber auch möglich, zusätzlich zu dem Kabel CC1 ein weiteres optisches Kabel einzuziehen und so die gewünschte Gesamtfaserzahl x zu erreichen.

In dem Verzweigungspunkt KV werden die einzelnen Verzweigungseinrichtungen KVE1-KVEp entfernt und durch Spleise SP1-SPx ersetzt. Anders ausgedrückt bedeuted dies, daß jede der Verteilungsleitungen EC1-ECx direkt an jeweils einen der Lichtwellenleiter LW1-LWx des gemeinsamen optischen Kabels CC2 angeschlossen wird. Abgesehen von dem Spleißanschluß können die erdverlegten Verteilerleitungen EC1-ECx unverändert beibehalten werden.

Auf der Teilnehmerseite kann so verfahren werden, daß die Abzweigschaltung AE1-AEx erhalten bleiben, so daß weiterhin n Teilnehmer TN1-TNn versorgt werden können.

Bevorzugt ist es aber auch möglich, die Versorgung im Teilnehmerbereich dadurch zu verbessern, daß die (passiven) Verzweigungseinrichtungen KVE1-KVEp nach Fig. 1 in den Bereich der Abzweigschaltungen AE1-AExp verlegt werden.

In Fig. 3 ist ein Amt AT1 dargestellt, eine doppelte Lichtwellenleiterverbindung zum jeweiligen Kabelverzweigungspunkt KV vorgesehen ist, wobei diese Doppelverbindung für einen Übertragungsweg (d.h. für einen der Lichtwellenleiter LW1-LWp) nach Fig. 1 steht. Im vorliegenden Beispiel ist also angenommen, daß anstelle des einen Lichtwellenleiters LW1 nach Fig. 1 bei der Ausführungsform nach Fig. 3 zwei Lichtwellenleiter LW11 und LW12 vorgesehen sind, also eine Zweiwegeführung. Dies hat den Vorteil, daß bei Ausfall eines der Lichtwellenleiter, z. B. LW11 auf den zweiten Lichtwellenleiter LW12 umgeschaltet werden kann.

**Patentansprüche**

1.  Optisches Nachrichtennetz mit mindestens einem ersten von einem Amt (AT) kommenden gemeinsamen Kabel (CC1), das in einem Rohrzug (RZ) bis zu einem Kabelverzweigungspunkt (KV) geführt ist, wo über mindestens eine Verzweigerungseinrichtung (KVE) eine Aufteilung in eine Vielzahl (x) optischer Einzelkabel (EC1-ECx) erfolgt, die zu verschiedenen Abzweigeinrichtungen (AE1-AEx) führen, **dadurch gekennzeichnet,** daß in einer ersten Ausbaustufe (Fig. 1) das gemeinsame Kabel (CC1) eine Anzahl (p) von Lichtwellenleitern aufweist, die wesentlich geringer ist als die Zahl (x) der Lichtwellenleiter der über die Verzweigungseinrichtung (KVE) angeschlossenen Einzelkabel (EC1-ECn), daß in einer zweiten Ausbaustufe (Fig. 2) ein gemeinsames Kabel (CC2) in den Rohrzug (RZ) eingebracht wird, das, gegebenenfalls zusammen mit dem eventuell verbliebenen Kabel, eine Anzahl (9) von Lichtwellenleitern aufweist, die mindestens der Zahl (x) der Lichtwellenleiter der Einzelkabel (EC1-ECx) entspricht und daß die Verzweigungseinrichtung (KVE) am Verzweigungspunkt (KV) entfernt und die Lichtwellenleiter des gemeinsamen Kabels (CC2) direkt über Spleiße (SP1 bis SPx) mit den Lichtwellenleitern der Einzelkabel (EC1-ECx) durchverbunden werden.

2.  Optisches Nachrichtennetz nach Anspruch 1, **dadurch gekennzeichnet,** daß in der zweiten Aufbaustufe die Verzweigungseinrichtung (KVE1-KVEp) aus dem Verzweigungspunkt (KV) entfernt werden und zumindest teilweise im Bereich der Einzelkabel (EC1-ECpx) an die dortigen Lichtwellenleiter angeschlossen werden.

3.  Optisches Nachrichtennetz nach einem der vorhergehenden Ansprüche, **dadurch gekennzeichnet,** daß zumindest ein Teil in der ersten Aufbaustufe am Ende der Verzweigungsleitungen vorgesehenen Abzweigeinrichtungen (AE1-AEpx) in der zweiten Aufbaustufe (Fig. 2) in den Teilnehmerbereich verlegt werden.

4.  Optisches Nachrichtennetz nach einem der vorhergehenden Ansprüche, **dadurch gekennzeichnet,** daß die Signalübertragung in der ersten Ausbaustufe (Fig. 1) für die Teilnehmer eines Bereiches mit nur einem ZeitmultiplexSystem (TDMA) erfolgt und daß in der zweiten Ausbaustufe mehrere Zeitmultiplex-Systeme angewendet werden, um die Bandbreiten für die einzelnen Teilnehmer zu erhöhen.

5.  Optisches Nachrichtennetz nach einem der vorhergehenden Ansprüche, **dadurch gekennzeichnet,** daß zwischen den Abzweigeinrichtungen (AE1-AEx) und den Teilnehmern (TN1-TNn) Kabel verlegt sind, die sowohl Kupferadern als auch Lichtwellenleiter enthalten.

6.  Optisches Nachrichtennetz nach einem der vorhergehenden Ansprüche, **dadurch gekennzeichnet,** daß die Einzelkabel (EC1-ECx) erdverlegt sind.

7.  Optisches Nachrichtennetz nach einem der vorhergehenden Ansprüche, **dadurch gekennzeichnet,** daß das Netz Reserve-Lichtwellenleiter enthält, mit denen einzelne Teilnehmer direkt breitbandig bzw. viele Teilnehmer mit Verteildiensten versorgt werden können.

8.  Optisches Nachrichtennetz nach einem der vorhergehenden Ansprüche, **dadurch gekennzeichnet,** daß für die Kommunikations-Verbindungen Mehrwegeführungen vorgesehen sind (Fig. 3).

**FIG 1**

**FIG 2**

**FIG 3**